# EUROPÄISCHE PATENTSCHRIFT

(11) **EP 4 163 599 B1**
(45) Veröffentlichungstag und Bekanntmachung des Hinweises auf die Patenterteilung: **04.06.2025**
(21) Anmeldenummer: 22170441.4
(22) Anmeldetag: 28.04.2022
(51) Int. Cl.: G01D 5/14, B62D 15/02, B62D 6/10, G01L 3/10

(54) **LENKSYSTEM FÜR EIN KRAFTFAHRZEUG**
STEERING SYSTEM FOR A MOTOR VEHICLE
SYSTÈME DE DIRECTION POUR UN VÉHICULE AUTOMOBILE

(30) Priorität: 06.10.2021 EP 21201197
(43) Veröffentlichungstag der Anmeldung: 12.04.2023
(73) Patentinhaber: thyssenkrupp Presta Aktiengesellschaft, 9492 Eschen (LI); thyssenkrupp AG, 45143 Essen (DE)
(72) Erfinder: Dreher, Simon, 9470 Buchs (CH)
(74) Vertreter: thyssenkrupp Intellectual Property GmbH

(56) Entgegenhaltungen:
- EP-A1- 3 961 174
- WO-A1-2020/174170
- FR-A1- 3 093 181
- US-A1- 2018 118 259

## Beschreibung

### Stand der Technik

Die Erfindung betrifft ein Lenksystem für ein Kraftfahrzeug mit einer Lenkwelle, einem Drehstab und einem mindestens ein Sensorelement aufweisenden Drehsensor, umfassend ein an der Lenkwelle angebrachtes, mit dieser um eine Achse drehbarer Magnetelement, und zwei Flussleiter, und zwei relativ zur Lenkwelle feststehend koaxial angeordnete, axial zueinander beabstandete Statorelemente, die über die zwei Flussleiter mit dem mindestens einen Sensorelement wirkverbunden sind, wobei ein Flussleiter jeweils einen Sammelabschnitt, einen Verbindungsabschnitt und einen Kompensatorabschnitt aufweist, wobei der Sammelabschnitt mit einem Statorelement verbunden ist und über einen Verbindungsabschnitt mit dem Kompensatorabschnitt verbunden ist, und wobei das Sensorelement zwischen den beiden Flussleitern angeordnet ist, wobei die Lenkwelle eine obere Lenkwelle umfasst, die über den Drehstab mit einer unteren Lenkwelle verbunden ist.

Bei einem gattungsgemäßen elektro-mechanischen Hilfskraft-Lenksystem oder einem Steerby-Wire-Lenksystem eines Kraftfahrzeugs dient der Drehsensor zur Erfassung eines manuellen Lenkbefehls. Der Drehsensor erfasst die Verdrehung einer Lenkwelle durch manuelle Betätigung einer Lenkhandhabe, und zusätzlich oder alternativ das in die Lenkwelle eingebrachte manuelle Lenkmoment, und erzeugt daraus elektrische Steuersignale zur Ansteuerung eines elektrischen Lenkantriebs, der einen entsprechenden Lenkeinschlag der gelenkten Räder bewirkt.

Zur Erfassung einer Drehbewegung sind Drehsensoren mit einer magnetischen Sensorvorrichtung bekannt, welche als Drehmomentsensor oder Drehwinkelsensor ausgebildet sein können, oder als kombinierte Drehmoment- und Drehwinkelsensor. Ein derartiger Drehsensor ist beispielsweise in der WO 2020/174170 A1 beschrieben. Dieser umfasst zwei Statorelemente und ein Magnetelement, der relativ zu den Statorelementen drehbar angeordnet, und derart ausgestaltet ist, dass er einen von der relativen Winkelorientierung abhängigen Magnetfluss in die Statorelemente einkoppelt. Durch Messung des in die Statorelemente eingekoppelten Magnetflusses kann die Verdrehung eines den Magneten aufweisenden Bauteils relativ zu den Statorelementen bestimmt werden. Zur Realisierung eines Drehwinkelsensors ist es möglich, durch eine drehfeste Fixierung der Statorelemente den Drehwinkel der relativ dazu drehbaren, einen Magneten aufweisenden Lenkwelle zu bestimmen.

Ein Drehmoment kann durch die relative Verdrehung von zwei über ein torsionselastisches Element, beispielsweise einen Drehstab, gekoppelten Lenkwellenteilen bestimmt werden.

Die beiden Statorelemente sind ringförmig aus magnetisch leitfähigem Material ausgebildet und umgeben das Magnetelement koaxial zur Achse der Drehung. Die Statorelemente weisen außen umlaufende, kreisscheibenförmige Anschlussabschnitte auf, die über magnetische Flussleiter an einen magneto-elektrisches Sensorelement angekoppelt und dadurch magnetisch wirkverbunden sind, der beispielsweise ein Hall- oder magnetoresistives (GMR-) Sensorelement umfasst, in dem der über die Flussleiter eingeleitete Magnetfluss in ein elektrisches Signal umgesetzt wird.

Die Flussleiter weisen jeweils einen Sammelabschnitt auf, der sich über eine Sammelfläche erstreckt und mit dem Anschlussabschnitt eines Statorelements verbunden ist. Die Flussleiter weisen jeweils mindestens eine Koppelfläche auf und sind derart geformt und ausgebildet, dass die Koppelflächen der beiden Flussleiter beiderseits eines Luftspalts gegenüberliegen. Zwischen den Koppelflächen ist mindestens ein Sensorelement angeordnet. Durch das von dem Magnetelement erzeugte, winkelabhängige Magnetfeld, im Folgenden kurz als Messfeld bezeichnet, wird in die Statorelemente magnetische Fluss, der Messfluss, eingekoppelt, und über die Flussleiter zum Sensorelement geleitet.

Durch äußere magnetische Störfelder, die von außen ebenfalls in das Statorelement eingekoppelt werden und einen magnetischen Störfluss erzeugen, der den Messfluss überlagert, kann die Messung beeinträchtigt werden. Um derartigen Störungen entgegenzuwirken, wird im Stand der Technik vorgeschlagen, dass die Flussleiter mindestens einen Kompensatorabschnitt aufweisen, der mit dem Sammelabschnitt über einen Verbindungsabschnitt magnetisch verbunden ist und Abstand von den Statorelementen hat. Dadurch wird im Wesentlichen nur das Störfeld in den Kompensatorabschnitt eingekoppelt. Der darin erzeugte Störfluss wird dem in den Sammelabschnitt eingekoppelten, vom Störfluss überlagerten Messfluss mit umgekehrtem Vorzeichen überlagert, beispielsweise durch eine axial vertauschte Anordnung der Sammel- und Kompensatorabschnitte, bei der der Kompensatorabschnitt des einen Flussleiters axial im Bereich des Sammelabschnitts des anderen Flussleiters angeordnet ist, und umgekehrt.

Eine gleichartig aufgebaute Lenksäule ist auch aus der FR 3 093 181 A1 bekannt.

Aus der EP 3 961 174 A1 und der US 2018/118259 A1 sind Lenksäulen mit den eingangs genannten Merkmalen bekannt.

Die im Stand bekannten Drehsensoren ermöglichen zwar grundsätzlich die Messung von Drehbewegungen auch unter Störeinflüssen. Die geforderte hohe Zuverlässigkeit unter den speziellen Einsatzbedingungen und die hohen Sicherheitsanforderungen in Lenksystemen von Kraftfahrzeugen können jedoch zum Teil nicht gewährleistet werden.

Angesichts der vorangehend erläuterten Problematik ist es eine Aufgabe der vorliegenden Erfindung, bei einem Lenksystem für ein Kraftfahrzeug eine verbesserte und robustere Erfassung von Lenkeingaben zu ermöglichen.

### Darstellung der Erfindung

Diese Aufgabe wird erfindungsgemäß gelöst durch das Lenksystem mit den Merkmalen des Anspruchs 1. Vorteilhafte Weiterbildungen ergeben sich aus den Unteransprüchen.

Bei einem Lenksystem für ein Kraftfahrzeug mit einer Lenkwelle, einem Drehstab und einem mindestens ein Sensorelement aufweisenden Drehsensor, umfassend ein an der Lenkwelle angebrachtes, mit dieser um eine Achse drehbarer Magnetelement, und zwei Flussleiter, und zwei relativ zur Lenkwelle feststehend koaxial angeordnete, axial zueinander beabstandete Statorelemente, die über die zwei Flussleiter mit dem mindestens einem Sensorelement wirkverbunden sind, wobei ein Flussleiter jeweils einen Sammelabschnitt, einen Verbindungsabschnitt und einen Kompensatorabschnitt aufweist, wobei der Sammelabschnitt mit einem Statorelement verbunden ist und über einen Verbindungsabschnitt mit dem Kompensatorabschnitt verbunden ist, und wobei das Sensorelement zwischen den beiden Flussleitern angeordnet ist, wobei die Lenkwelle eine obere Lenkwelle umfasst, die über den Drehstab mit einer unteren Lenkwelle verbunden ist, ist erfindungsgemäß vorgesehen, dass eine an der oberen Lenkwelle angeordnete Verdrehsicherung mit einer an der unteren Lenkwelle angeordneten Verdrehsicherung zur Begrenzung einer Verdrillung des Drehstabes in sich selbst, in Eingriff gebracht ist, wobei die Verdrehsicherung ein ferromagnetisches Material aufweist, und der Kompensatorabschnitt eine Kompensatorfläche aufweist, die kleiner als eine Sammelfläche des Sammelabschnitts ist, wobei das Flächenverhältnis von Sammelfläche und Kompensatorfläche zwischen 1,5 und 2, oder zwischen 1,5 und 1,75, oder 1,75 beträgt.

Durch die erfindungsgemäße Verdrehsicherung ist eine lokale Ansammlung von ferromagnetischem Material im Lenksystem vorhanden, die den aus den externen magnetischen Störfeldern resultierenden magnetischen Störfluss über eine Flussablenkung beeinflusst. Auch können Zahnräder, die einseitig zum Drehsensor angeordnet sind, den aus den externen magnetischen Störfeldern resultierenden magnetischen Störfluss über eine Flussablenkung beeinflussen. Mit den erfindungsgemäß vorgeschlagenen Lösungen ist es jedoch möglich für derartige Lenksysteme eine erhebliche Verbesserung der Erfassung der Lenkeingabe darzustellen.

Die der Erfindung zugrunde liegenden Wirkzusammenhänge der Flächenverhältnisse sind im Stand der Technik nicht erkannt oder problematisiert worden, und folglich konnten die daraus resultierenden spezifischen Probleme beim Einsatz eines magnetischen Drehsensors in einem Kraftfahrzeug-Lenksystem dadurch nicht gelöst werden. Entsprechend geben die erfindungsgemäß vorgeschlagenen Größenverhältnisse eine für den Einbau in eine Kraftfahrzeuglenkung günstige Darstellung wieder.

Weiter kann bevorzugt festgestellt werden, weil bei einem Lenksystem für ein Kraftfahrzeug mit einem Drehsensor, umfassend ein an einer Lenkwelle angebrachtes, mit dieser um eine Achse drehbarer Magnet und zwei relativ zur Lenkwelle feststehend koaxial angeordnete, axial zueinander beabstandete Statorelemente, die über zwei Flussleiter mit mindestens einem Sensorelement wirkverbunden sind, wobei ein Flussleiter jeweils einen Sammelabschnitt, einen Verbindungsabschnitt und einen Kompensatorabschnitt aufweist, wobei der Sammelabschnitt mit einem Statorelement verbunden ist und über einen Verbindungsabschnitt mit dem Kompensatorabschnitt verbunden ist, und wobei das Sensorelement zwischen den beiden Flussleitern angeordnet ist, ist erfindungsgemäß vorgesehen, dass die Lenkwelle eine obere Lenkwelle umfasst, die über einen Drehstab mit einer unteren Lenkwelle verbunden ist, wobei eine an der oberen Lenkwelle angeordnete Verdrehsicherung mit einer an der unteren Lenkwelle angeordneten Verdrehsicherung zur Begrenzung einer Verdrillung des Drehstabes in sich selbst, in Eingriff gebracht ist und, wobei der Kompensatorabschnitt eine Kompensatorfläche aufweist, die kleiner einer Sammelfläche des Sammelabschnitts ist, kann eine erhebliche Verbesserung der Genauigkeit der Robustheit der Erfassung der Lenkeingaben erreicht werden.

Weiter kann bevorzugt festgestellt werden, weil bei einem Lenksystem für ein Kraftfahrzeug mit einem Drehsensor, umfassend ein an einer Lenkwelle angebrachtes, mit dieser um eine Achse drehbarer Magnet und zwei relativ zur Lenkwelle feststehend koaxial angeordnete, axial zueinander beabstandete Statorelemente, die über zwei Flussleiter mit mindestens einem Sensorelement wirkverbunden sind, wobei ein Flussleiter jeweils einen Sammelabschnitt, einen Verbindungsabschnitt und einen Kompensatorabschnitt aufweist, wobei der Sammelabschnitt mit einem Statorelement verbunden ist und über einen Verbindungsabschnitt mit dem Kompensatorabschnitt verbunden ist, und wobei das Sensorelement zwischen den beiden Flussleitern angeordnet ist, ist erfindungsgemäß vorgesehen, dass die Lenkwelle eine obere Lenkwelle umfasst, die über einen Drehstab mit einer unteren Lenkwelle verbunden ist, wobei eine an der oberen Lenkwelle angeordnete Verdrehsicherung mit einer an der unteren Lenkwelle angeordneten Verdrehsicherung zur Begrenzung einer Verdrillung des Drehstabes in sich selbst, in Eingriff gebracht ist und ein Zahnrad vorgesehen ist, das an einer der beiden Lenkwellen fixiert ist und den Drehstab rotationssymmetrisch umschließt, wobei der Kompensatorabschnitt eine Kompensatorfläche aufweist, die kleiner einer Sammelfläche des Sammelabschnitts ist, kann eine erhebliche Verbesserung der Genauigkeit der Robustheit der Erfassung der Lenkeingaben erreicht werden. Das Zahnrad ist bevorzugt über ein Getriebe mit einem elektrischen Antrieb gekoppelt.Die in ihrer Grundform ringförmigen Statorelemente weisen vorzugsweise kreisscheiben- oder kreisringförmige, flächenhaft quer zur Achse erstreckte Anschlussabschnitte auf, die gleichbedeutend auch als Anschlussflansche bezeichnet werden. Die Anschlussabschnitte haben bevorzugt Axialflächen auf ihren gegeneinander gerichteten Innenseiten und ihren voneinander weg weisenden Außenseiten.

Die bevorzugt ebene Flächenerstreckung eines Sammelabschnitts entspricht definitionsgemäß der Sammelfläche, und entsprechend entspricht die bevorzugt ebene Flächenerstreckung eines Sammelabschnitts definitionsgemäß der Kompensatorfläche. Jeweils ein Sammelabschnitt ist magnetisch mit einer dieser Axialflächen verbunden, wobei die Sammelfläche ganz oder teilweise eine Axialfläche eines Anschlussabschnitts flächig kontaktieren kann. Die Kompensatorabschnitte sind radial außerhalb der Statorelemente angeordnet, und die Kompensatorflächen erstrecken sich bevorzugt außerhalb der Anschlussabschnitte. Vorzugsweise können die Innen- und Außenseiten der Anschlussabschnitte der Statorelemente, die Sammelflächen und die Kompensatorflächen zumindest abschnittweise plan ausgebildet und quer zur Achse ausgerichtet sein, d.h. zumindest bereichsweise zueinander parallele Axialflächen aufweisen.

Erfindungsgemäß ist die Flächenerstreckung des Kompensatorabschnitts relativ zur Flächenerstreckung des Sammelabschnitts kleiner. Dadurch kann sichergestellt werden, dass der zur Kompensation des Messignals genutzte Anteil eines magnetischen Störfelds, der von den Kompensatorabschnitten erfasst und auch als Kompensationsfluss bezeichnet wird, in einer optimalen Größenordnung gehalten wird. Insbesondere kann eine Überkompensation verhindert werden, die ansonsten zu einer Verfälschung des Messergebnisses führen könnte. Daraus resultiert der Vorteil einer höheren Messgenauigkeit der Drehwinkelmessung, welche zu einer größeren Betriebssicherheit führt. Dies ist insbesondere vorteilhaft für ein Kraftfahrzeug-Lenksystem, was für den Betrieb hoch sicherheitsrelevant ist.

Zur Berechnung des Flächenverhältnisses können bevorzugt die Beträge der Flächenprojektionen in einer vorgegebenen Richtung herangezogen werden, beispielsweise die in axialer Richtung projizierten Sammel- und Kompensatorflächen. Dadurch kann sichergestellt werden, dass ein die Sammel- und Störflächen durchsetzendes externes magnetisches Störfeld besser kompensiert werden kann.

Erfindungsgemäß ist vorgesehen, dass das Flächenverhältnis von Sammelfläche und Kompensatorfläche zwischen 1,5 und 2, oder in einem engeren Bereich zwischen 1,5 und 1,75 beträgt.

Besonders vorteilhaft kann es sein, dass das Flächenverhältnis von Sammelfläche und Kompensatorfläche 1,75 beträgt.

Die optimierte Wirkung in den erfindungsgemäßen Bereichen des Verhältnisses, und insbesondere für das vorgenannte konkrete Verhältnis, kann dadurch erklärt werden, dass externe Störfelder ungehindert auf die außen freiliegenden Kompensatorflächen treffen, die Sammelflächen jedoch zumindest teilweise durch die Statorelemente oder die Anschlussabschnitte der Statorelemente gegen externe Störfelder abgeschirmt sind.

Ein weiterer praktischer Vorteil ist, dass die Kompensatorabschnitte weniger weit über die Statorelemente nach außen vorstehen, wodurch weniger Bauraum innerhalb der Lenksäule beansprucht wird.

Bevorzugt kann vorgesehen sein, dass die Flussleiter als einstückige Blechformteile ausgebildet sind. Die Blechteile bestehen aus einem magnetisch gut leitfähigem Material, beispielsweise einem Eisenblech mit definierten magnetischen Eigenschaften. Die Fertigung kann rationell durch Pressen, Stanzen, Feinschneiden, Biegen, Prägen oder dergleichen erfolgen. Der Flussleiter kann dadurch eine im Wesentlichen durchgehend gleiche Materialstärke haben, welche im Wesentlichen der Blechdicke entspricht. In einer Ausführung mit quer zur Achse ausgerichteten Sammel- uns Kompensatorflächen korrespondiert die Blechdicke mit der axialen Dicke der Sammel- und Kompensatorabschnitte.

Ein bevorzugter Wert für die Blechdicke liegt zwischen 0,6 mm und 1 mm, besonders bevorzugt bei 0,8 mm.

Eine vorteilhafte Ausführung kann dadurch realisiert sein, dass die Flussleiter zwischen den Kompensatorabschnitten und den Sammelabschnitten im Bereich der Verbindungsabschnitte überkreuzt sind, so dass sich die Kompensatorabschnitte und die Sammelabschnitte axial entgegengesetzt gegenüberliegen. Dabei sind die axialen Positionen vertauscht. Das bedeutet, dass der Sammelabschnitt des einen Flussleiters und der Kompensatorabschnitt des anderen Flussleiters axial auf einer Seite liegen, und der Sammelabschnitt des anderen Flussleiters und der Kompensatorabschnitt des einen Flussleiters axial gegenüberliegend auf der anderen Seite. Dadurch wird eine Anordnung gebildet, die bezüglich einer quer zur Achse stehenden Spiegelebene spiegelsymmetrisch ist. In Umfangsrichtung gesehen wird durch die Verbindungslinien zwischen den Sammel- und Kompensationsabschnitten eine X-förmige Konfiguration gebildet. Diese ermöglicht eine effektive Kompensation von externen magnetischen Störeinflüssen.

Es ist vorteilhaft, dass die Kompensatorflächen und die Sammelflächen der Flussleiter überwiegend parallel zueinander und zu Anschlussabschnitten der Statorelemente sind, mit denen die Sammelabschnitte verbunden sind. Die Anschlussflächen der Statorelemente sind bevorzugt kreisscheiben- oder kreisringförmig mit Axialflächen ausgebildet, die mit korrespondierende axialen Abschnitten der Sammelabschnitte verbunden sind. Unter überwiegend ist auf jeden Fall zu verstehen, dass wenigstens 75% der Kompensatorflächen und die Sammelflächen parallel zueinander ausgerichtet sind.

Vorzugsweise kann vorgesehen sein, dass die Sammelabschnitte an axial gegenüberliegenden Innenseiten der Statorelemente angebracht sind. Dadurch können beide Flussleiter geschützt und bauraumoptimiert axial zwischen den Anschlussabschnitten untergebracht werden, wobei die Sammelabschnitte die inneren axialen Stirnseiten der Anschlussabschnitte kontaktieren.

Eine vorteilhafte Ausführung kann sein, dass der axiale Abstand der Sammelabschnitte kleiner ist als der axiale Abstand der Kompensatorabschnitte. Dabei sind die Sammelabschnitte relativ zu den Kompensatorabschnitten in axialer Richtung nach innen versetzt. Dadurch, dass die Sammelabschnitte mit den Innenseiten der Anschlussabschnitten der Statorelemente verbunden sind, werden eine verbesserte bauliche Integration und ein kleinerer Bauraum ermöglicht.

Eine optimierte Weiterbildung kann vorsehen, dass die Kompensatorabschnitte bündig mit Anschlussabschnitten der Statorelemente ausgerichtet sind. Damit ist gemeint, dass sich eine Axialebene durch die Kompensatorabschnitte und die kreisscheiben- oder kreisringförmigen Anschlussabschnitte erstreckt, mit anderen Worten deren Querschnitte sich in radialer Richtung gesehen überschneiden. Dies kann beispielsweise dadurch erreicht werden, dass die Sammelabschnitte mit den Innenseiten der Anschlussabschnitte verbunden sind, und um die axiale Dicke der Anschlussabschnitte axial nach innen relativ zu den Kompensatorabschnitten versetzt sind. Dadurch können Vorteile bezüglich einer besseren Kompensationswirkung insbesondere bei inhomogenen Störfeldern realisiert werden.

Zur Realisierung der vorgenannten Ausführung kann vorgesehen sein, dass der axiale Abstand der Sammelabschnitte kleiner ist als der axiale Abstand der Kompensatorabschnitte. Dabei entspricht der axiale Abstand der Außenseiten der Sammelabschnitte dem Abstand der Innenseiten der Anschlussabschnitte der Statorelemente.

Es kann vorgesehen sein, dass die Kompensatorabschnitte mit Koppelabschnitten verbunden sind, die dem Sensorelement zugewandte Koppelflächen aufweisen. Diese Koppelabschnitte können als schmale, fingerartige Streifen ausgebildet sie, die daher auch als Flussfinger bezeichnet werden. Die Koppelabschnitte ragen in den axialen Zwischenraum zwischen den Flussleitern, so dass die Koppelflächen, die bevorzugt parallel zueinander und zu den Kompensatorflächen ausgerichtet sind, sich axial beiderseits des Sensorelements gegenüberliegen. Sie können in unmittelbarem Kontakt oder über einen definierten Luftspalt mit dem Sensorelement magnetisch gekoppelt sein. Die Koppelabschnitte können zusammen mit den Verbindungsabschnitten ausgebildet sein, wobei ein Verbindungsabschnitt mindestens eine Koppelfläche aufweist. Alternativ oder zusätzlich können Flussfinger separat von den Verbindungsabschnitten ausgebildet sein. Bevorzugt kann von dem Kompensatorabschnitt mindestens ein Flussfinger abgehen, der nicht unmittelbar mit dem Sammelabschnitt verbunden ist, und Abstand zu dem Verbindungsabschnitt hat, der diesen Kompensatorabschnitt mit dem Sammelabschnitt verbindet. In seinem abstehenden Endbereich kann ein Flussfinger eine Koppelfläche aufweisen, die einer korrespondierenden Koppelfläche an einem Flussfinger oder einem Verbindungsabschnitt des anderen Flussleiters zugewandt ist. Die Anordnung und Ausgestaltung der Koppelabschnitte ermöglicht eine optimierte Überlagerung und Kompensation von Störfeldern.

Es ist möglich, dass ein Sensorelement eingesetzt ist. Es kann darüber hinaus vorteilhaft sein, dass mindestens zwei Sensorelemente mit Abstand voneinander vorgesehen sind. Als Sensorelemente können beispielsweise Hall- oder magnetoresistive (GMR-) Sensoren eingesetzt werden. Durch Dopplung oder Vervielfachung der Sensoren kann eine Mittelung und/oder sonstige messtechnische Aufbereitung der Messwerte erfolgen. Auch kann die Sicherheit der Anordnung durch Redundanz auf diese Weise erhöht werden. Die Sensorelemente sind bevorzugt räumlich voneinander entfernt, und haben beispielsweise Abstand in Umfangsrichtung bezüglich der Achse. Dadurch können die in die Kompensatorabschnitte eingekoppelten Störflüsse mit räumlichen Auflösung gemessen werden, wodurch eine weiter verbesserte Kompensation von Störfeldern ermöglicht wird.

Eine vorteilhafte Weitebildung kann vorsehen, dass ein Kompensatorabschnitt einen abgewinkelten Flügelabschnitt aufweist. Ein Flügelabschnitt, gleichbedeutend auch als Winglet bezeichnet, bildet einen quer zur ebenen, bevorzugt axialen Kompensatorfläche umgebogenen Teil- oder Randabschnitt, der sich beispielsweise im Wesentlichen parallel zur Achse erstrecken kann, und somit in den Zwischenraum zwischen den Anschlussabschnitten der Statorelemente ragt. Ein Winglet kann vorzugsweise gegen den jeweils anderen Kompensatorabschnitt gerichtet sein. Dabei ist die axiale Erstreckung eines Winglets bevorzugt kleiner als der axiale Abstand der Kompensatorabschnitte. Ein Vorteil ist, dass der zur Erfassung von Störfeldern aktive Bereich des Kompensatorabschnitts vergrößert werden kann, auch bezüglich schräg einstreuender Störfelder. Dadurch kann die Kompensationswirkung optimiert werden.

Es kann mit Vorteil vorgesehen sein, dass die Flussleiter und das Sensorelement in einem Gehäuse angeordnet sind. Ein Gehäuse (Sensorgehäuse) kann beispielsweise aus Kunststoff gefertigt sein, beispielsweise als Spritzgussteil, und schützt die in seinem Inneren untergebrachten Bauteile. In einer vorteilhaften Weiterbildung ist es möglich, dass das Gehäuse mit einer Vergussmasse ausgefüllt ist. Diese kann als flüssiges Harz eingefüllt werden, welches die Flussleiter und das Sensorelement umfließt, und zu einem festen Block aushärtet, in dem dann die Flussleiter und das Sensorelement stoff- und/oder formschlüssig fest eingebettet sind. Dadurch wird eine eindeutige Positionierung unlösbar fixiert, was positiv für eine langfristig stabile Messgenauigkeit ist.

Es kann vorgesehen sein, dass ein Kompensatorabschnitt und/oder ein Sammelabschnitt einen Führungsabschnitt aufweist. Der Führungsabschnitt ermöglicht die Führung und Positionierung in einem Gehäuse oder an einem anderen Bauteil des Drehsensors, welches ein korrespondierendes Führungselement aufweist, beispielsweise eine Führungsnut. Ein Führungsabschnitt kann beispielsweise einen von dem Kompensatorabschnitt nach außen vorstehenden Führungsvorsprung, eine Führungsnase, -schiene oder dergleichen aufweisen, die in formschlüssigen Führungseingriff mit einem korrespondierenden Führungselement gebracht werden kann, beispielsweise durch Einschieben in eine Führungsnut. Dadurch kann eine verbesserte Positionierung und Fixierung der Flussleiter erfolgen, was vorteilhaft sowohl für die Montage als auch für die Betriebssicherheit ist.

Es kann vorgesehen sein, dass ein Kompensatorabschnitt und/oder ein Sammelabschnitt und/oder ein Statorelement einen Anschlagabschnitt aufweist. Ein Anschlagabschnitt ist derart ausgebildet und angeordnet, dass er in mechanischen Anschlag gebracht werden kann mit einem korrespondierenden Gegenanschlag, so dass eine einfache und genaue mechanische Positionierung relativ zueinander erfolgen kann. Ein Anschlagabschnitt kann beispielsweise einen Vorsprung oder dergleichen aufweisen, der gegen eine korrespondierende Fläche oder Kante anschlagen kann. Beispielsweise kann ein Sammelabschnitt einen axial vorstehenden Anschlagabschnitt aufweisen, der bei der Montage in radialer Richtung gegen eine Außenkante eines Anschlussabschnitts eines Statorelements anschlagen kann. Dann ist der Sammelabschnitt bereits exakt relativ zum Statorelement positioniert, wodurch die Fertigung vereinfacht wird.

Vorzugsweise kann vorgesehen sein, dass ein Sammelabschnitt des einen Flussleiters und ein Kompensatorabschnitt des anderen einen radialen Abstand voneinander haben, der zu einer radialen Breite des Sammelabschnitts des anderen Flussleiters ein Verhältnis zwischen 0,5 und 2 hat. Dadurch ist eine weitere Optimierung der Kompensationswirkung ermöglicht. Bevorzugt kann das Verhältnis zwischen 0,75 und 1,5 betragen. Weiter bevorzugt kann es zwischen 0,75 und 1,25 betragen, und noch weiter bevorzugt zwischen 0,8 und 1,2.

Besonders vorteilhaft kann es sein, dass Verhältnis des vorgenannten Abstands zur Breite 1 beträgt, so dass der radiale Abstand der radialen Breite des Sammelabschnitts entspricht.

Es kann vorgesehen sein, dass der Sammelabschnitt des einen Flussleiters zum Kompensatorabschnitt des anderen Flussleiters eine axiale Höhendifferenz hat, welche zu einer axialen Dicke eines Sammelabschnitts ein Verhältnis zwischen 0,5 bis 2 hat. Die axiale Dicke entspricht der oben erläuterten Blechdicke. Dadurch wird die oben beschriebene bündige Ausrichtung der Kompensatorabschnitte mit den Anschlussabschnitten der Statorelemente vereinfacht. Bevorzugt kann das Verhältnis 0,75 bis 1,5 betragen, oder weiter bevorzugt zwischen 0,75 bis 1,25, oder noch weiter bevorzugt zwischen 0,8 bis 1,2. Dadurch kann eine verbesserte bündige Ausrichtung des Kompensatorabschnitts mit dem Anschlussabschnitts des Statorelements ermöglicht werden.

Besonders vorteilhaft kann es sein, dass die vorgenannte axiale Höhendifferenz gleich der axialen Dicke sein, was einem Verhältnis von 1 entspricht.

Es ist mit Vorteil möglich, dass der Sammelabschnitt des einen Flussleiters zum Kompensatorabschnitt desselben Flussleiters eine axiale Höhendifferenz hat, welche zu einer axialen Höhendifferenz zwischen den Anschlussabschnitten der beiden Flussleiter ein Verhältnis zwischen 0,75 und 2,2 hat. Der axiale Abstand der Anschlussabschnitte wird in axialer Richtung zwischen den Seiten gemessen, an denen die Sammelabschnitte angebracht sind, beispielsweise die oben genannten Innenseiten. Bevorzugt kann das Verhältnis zwischen 0,85 und 1,2 betragen, oder besonders bevorzugt zwischen 0,9 und 1,15.

Besonders vorteilhaft kann es sein, dass die vorgenannte axiale Höhendifferenz einen Wert von 1,125 hat.

Bevorzugt kann vorgesehen sein, dass die beiden Flussleiter in dem Bereich, in dem das Sensorelement angeordnet ist, einen axialen Höhenabstand im Bereich von 1,8 bis 2,2 einer axialen Dicke der Flussleiter aufweisen. Der Höhenabstand bezeichnet den Luftspalt zwischen den Flussleitern, deren axiale Dicke der oben erläuterten Blechdicke entspricht.

Es ist vorteilhaft, dass ein axialer Höhenabstand zwischen den Flussleitern und dem Sensorelement kleiner als die axiale Dicke der Flussleiter ist. Dieser Höhenabstand bezeichnet den Luftspalt, der zwischen dem Sensorelement und den oben genannten Koppelflächen besteht, und der möglichst gering sein soll, um eine effiziente Übertagung des magnetischen Flusses zu gewährleisten. Wird als axiale Dicke die Blechdicke angesetzt. Ist es vorteilhaft, dass der Höhenabstand der 0,6-fachen bis 1-fachen Blechdicke entspricht, besonders bevorzugt der einfachen Blechdicke.

Der axiale Abstand zwischen den Anschlussabschnitten der Statorelemente kann zwischen dem 10- bis 30-fachen der axialen Dicke der Flussleiter liegen, welche der oben genannten Blechdicke entspricht, die beispielsweise 0,8 mm betragen kann. Bevorzugt kann der Abstand das 12- bis 25-fache betragen, besonders bevorzugt das 12- bis 15-fache.

Besonders vorteilhaft kann es sein, dass der vorgenannte axiale Abstand dem 15-fachen der Blechdicke entspricht.

Der oben genannte abgewinkelte Flügelabschnitt (Winglet) kann bevorzugt um die 2- bis 7-fache axiale Dicke (Blechdicke) des Kompensationsabschnitts von der Kompensationsfläche vorstehen. Bevorzugt kann eine axiale Höhe der Winglets zwischen dem 2,5 und 5-fachen der Blechdicke entsprechen, besonders bevorzugt dem 2,7- bis 3,3-fachen.

Besonders vorteilhaft kann es sein, dass ein Winglet um das 3,3-fache der Blechdicke von dem Kompensatorabschnitt übersteht.

### Beschreibung der Zeichnungen

Vorteilhafte Ausführungsformen der Erfindung werden im Folgenden anhand der Zeichnungen näher erläutert. Im Einzelnen zeigen:
- Figur 1: ein Kraftfahrzeuglenksystem in einer schematischen perspektivischen Ansicht,
- Figur 2: eine vergrößerte Detailansicht des Drehsensors (=der Sensorvorrichtung) des Lenksystems gemäß Figur 1 in einer freigestellten schematischen Ansicht,
- Figur 3: eine vergrößerte Detailansicht des Drehsensors gemäß Figur 2,
- Figur 4: die Statorelemente und die Flussleiter freigestellt in einer schematischen perspektivischen Ansicht,
- Figur 5: die Flussleiter gemäß Figur 4 freigestellt und vergrößert in einer schematischen perspektivischen Ansicht,
- Figur 6: einen teilweisen Radialschnitt durch Drehsensor gemäß Figur 2 oder 3 (in einer Ansicht in Umfangsrichtung),
- Figur 7: die Flussleiter gemäß Figur 5 in einer axialen Ansicht,
- Figur 8: eine Schnittansicht ähnlich Figur 6 in einer vergrößerten Darstellung,
- Figur 9: die Flussleiter in einer alternativen Ausführung freigestellt und vergrößert in einer schematischen perspektivischen Ansicht analog Figur 5,
- Figur 10: einen Drehsensor in einer zweiten Ausführungsform umfassend Flussleiter gemäß Figur 9, in einer Ansicht analog Figur 6,
- Figur 11: die Statorelemente und die Flussleiter eines Drehsensors gemäß Figuren 9 oder 10 freigestellt in einer schematischen perspektivischen Ansicht analog zu Figur 4,
- Figur 12: die Statorelemente und die Flussleiter eines Drehsensors in einer dritten Ausführungsform freigestellt in einer schematischen perspektivischen Ansicht analog zu Figur 4,
- Figur 13: eine vergrößerte radiale Ansicht von außen auf den Drehsensor gemäß Figur 12,
- Figur 14: innerer Strang eines erfindungsgemäßen Lenksystems mit Drehsensor in auseinandergezogener Darstellung;
- Figur 14a: Darstellung eines Abschnitts eines Lenkwellenteils aus Figur 14 mit Verdrehsicherung;
- Figur 15: innerer Strang eines erfindungsgemäßen Lenksystems mit Drehsensor in auseinandergezogener Darstellung in einer weiteren Ausführungsform;
- Figur 15a: Darstellung eines Abschnitts eines Lenkwellenteils aus Figur 15 mit Verdrehsicherung;
- Figur 16: Darstellung aus Figur 6 mit Veranschaulichung der Flussablenkung.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

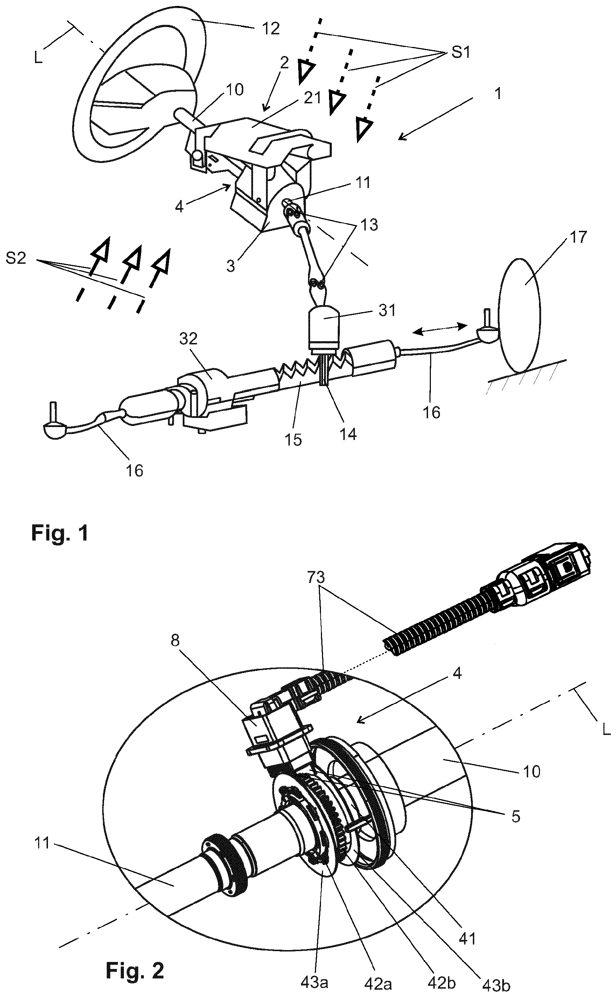

In Figur 1 ist ein als elektromechanische Hilfskraftlenkung ausgebildetes Kraftfahrzeuglenksystem 1 schematisch dargestellt. Diese weist eine Lenksäule 2 mit einer Trageinheit 21 auf, die an einer nicht dargestellten Karosserie eines Kraftfahrzeugs anbringbar ist.

In der Lenksäule 2 ist ein erstes, oberes Lenkwellenteil 10 einer Lenkwelle um eine Längsachse L drehbar gelagert. An dem bezüglich der Fahrtrichtung hinteren Ende ist an dem Lenkwellenteil 10 ein Lenkrad 12 drehfest angebracht, über welches ein Fahrer ein Lenkmoment (Handmoment) als Lenkbefehl in das obere Lenkwellenteil 10 einbringen kann.

Das obere Lenkwellenteil 10 ist über einen hier nicht dargestellten torsionselastischen Drehstab mit einem zweiten, unteren Lenkwellenteil 11 verbunden.

Das Lenkmoment wird über die Lenkwellenteile 10 und 11 über zwischengeschaltete Kreuzgelenke 13 auf ein Lenkritzel 14 übertragen, welches in eine längsverschieblich gelagerte Zahnstange 15 eingreift. Diese setzt eine Drehung der Lenkwelle 10 bei einem Lenkeingriff in eine Verschiebung von Spurstangen 16 um, wie mit dem Doppelpfeil angedeutet, welche den vorgegebenen Lenkeingriff als Lenkeinschlag auf die lenkbaren Räder 17 des Kraftfahrzeugs übertragen.

Eine elektrische Hilfskraftunterstützung kann einen an der Lenksäule 2 angebrachten, mit der Lenkwelle 10 gekoppelten Hilfskraftantrieb 3, oder einen am Ritzel 14 mit dem Lenkwellenteil 11 gekoppelten Hilfskraftantrieb 31 aufweisen, wobei die Hilfskraftantriebe 3 und 31 gleichartig aufgebaut sein können. Durch den Hilfskraftantrieb 3 oder 31 kann ein Hilfsdrehmoment in die untere Lenkwelle 11 und/oder das Lenkritzel 14 eingekoppelt werden, um den Fahrer bei der Lenkarbeit zu unterstützten.

Es kann auch ein Hilfskraftantrieb 32 vorgesehen sein, um eine die Lenkung unterstützende Hilfskraft in die Zahnstange 15 einzubringen.

Üblicherweise ist nur an einer der gezeigten drei Positionen ein Hilfskraftantrieb 3, 31 oder 32 angebracht. Das Hilfsdrehmoment bzw. die Hilfskraft, welche zur Unterstützung des Fahrers mittels der jeweiligen Hilfskraftantrieb 3, 31 oder 32 aufgebracht werden soll, wird unter Berücksichtigung eines von einem Drehsensor 4 ermittelten, vom Fahrer manuell eingebrachten Lenkmoments bestimmt. Hierzu weist der Drehsensor 4 einen Drehmomentsensor auf, der die von der Größe des manuell eigebrachten Lenkmoments abhängige relative Verdrehung der Lenkwellenteile 10 und 11 erfasst. Weiterhin ist bevorzugt ein Drehwinkelsensor vorgesehen, zur Erfassung der Winkelstellung des Lenkwellenteils 10 und/oder 11.

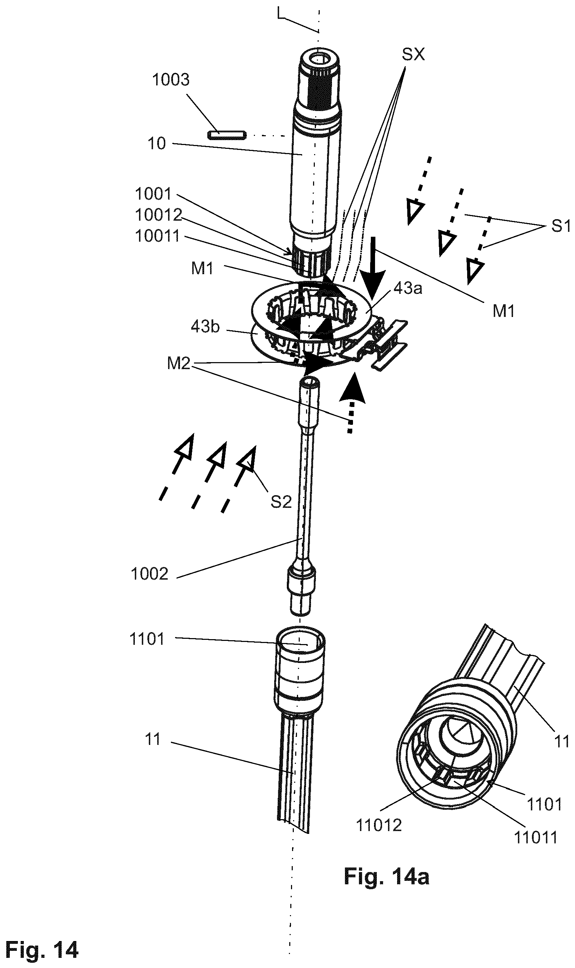

In der Figur 14 ist der innere Strang des Lenksystems 1, wie der in Figur 1 dargestellt ist, veranschaulicht. Entsprechend der Figur 14 ist dabei die Ausführungsform veranschaulicht, bei der der der Hilfskraftantrieb durch den Hilfskraftantrieb 31 der Figur 1 dargestellt ist. Das obere Lenkwellenteil 10 wird über einen mit einem Stift 1003 fixierten torsionselastischen Drehstab 1002 mit dem unteren Lenkwellenteil 11 verbunden. Bei Einbringung eines Drehmomentes in das Lenkrad 12 wird damit das obere Lenkwellenteil 10 verdreht und überträgt das Drehmoment über den Drehstab 1002 auf das untere Lenkwellenteil 11. Da der Verdrehung zunächst ein Widerstand entgegengesetzt wird, verdrillt sich der Drehstab 1002 in sich selbst, so dass das obere Lenkwellenteil 10 gegenüber dem unteren Lenkwellenteil einen Verdrehwinkel aufweist, der mit dem Drehsensor 4, von dem in der Figur 14 nur einzelne Elemente veranschaulicht sind, entsprechend erfasst wird.

Damit die Verdrehung begrenzt wird und eine mechanische Überlastung des Drehstabes 1002 vermieden wird, ist eine Verdrehsicherung, bestehend aus einer ersten Verdrehsicherung 1001, die in eine zweite Verdrehsicherung 1101 greift, vorgesehen. Dabei greifen mit einem vordefinierten Winkelspiel die Vorsprünge 10012 der ersten Verdrehsicherung in Rücksprünge 11011 der zweiten Verdrehsicherung ein. Ebenso mit einem vordefinierten Winkelspiel die Vorsprünge 11012 der zweiten Verdrehsicherung in Rücksprünge 10011 der ersten Verdrehsicherung ein. Wird das vorgesehene Winkelspiel erreicht, ist die maximale Verdrillung des Drehstabs 1002 in sich erreicht. Zur besseren Darstellung ist in Figur 14a die zweite Verdrehsicherung 1101 in einer anderen Ansicht dargestellt.

Diese Verdrehsicherungen 1001 und 1101 haben eine erhebliche Auswirkung auf den Verlauf der Störflüsse S1 und S2. Der magnetische Fluss des Störfluss S1 und des Störfluss S2 werden durch diese Verdrehsicherungen 1001 und 1101 einer Flussablenkung SX unterworfen und dadurch verändert.

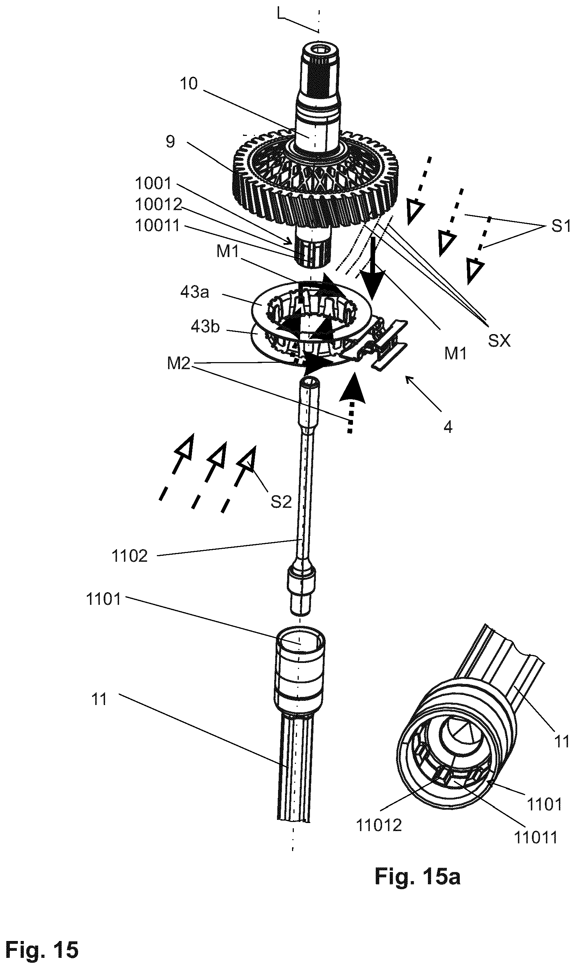

In der Figur 15 ist der innere Strang des Lenksystems 1, wie der in Figur 1 dargestellt ist, veranschaulicht. Figur 15a zeigt in einer anderen Ansicht die zweite Verdrehsicherung 1101 entsprechend der Ausführung der Figur 15. Entsprechend der Figur 15 ist dabei die Ausführungsform veranschaulicht, bei der der der Hilfskraftantrieb durch den Hilfskraftantrieb 3 der Figur 1 dargestellt ist. Das bedeutet im Ausführungsbeispiel, dass direkt in der Nähe des Drehsensors 4 ein Zahnrad 9 angeordnet ist, das den Drehstab rotationssymmetrisch umschließt. Das Zahnrad 9, im Beispiel als Schneckenzahnrad ausgebildet, ist im Lenksystem mit einem nicht dargestellten elektrischen Antrieb über eine nicht dargestellte Getriebeanordnung, bevorzugt ein Schneckengetriebe, gekoppelt. Abgesehen davon sind die Merkmale analog, wie in der Ausführung entsprechend der in Figur 14 veranschaulichten Ausführung, so dass auf eine wiederholte Wiedergabe der Beschreibung verzichtet werden kann.

Allerdings hat das Zahnrad 9 einen noch stärkeren Einfluss auf die Störflüsse S1 und S2, insbesondere wenn es einen ferromagnetischen Kern zur Befestigung auf einer der beiden Lenkwellen aufweist. Die Störflüsse S1 und S2 werden einer noch stärkeren Flussablenkung SX unterworfen und dadurch verändert.

Der Drehsensor 4 ist zwischen dem oberen Lenkwellenteil 10 und dem unteren Lenkwellenteil 11 angebracht, wie in der vergrößerten Darstellung von Figur 2 erkennbar ist, welche eine schematische perspektivische Ansicht der Lenksäule 2 aus Figur 1 vergrößert zeigt.

An dem Lenkwellenteil 10 ist koaxial ein Magnet 41 angebracht, der als Ringmagnet ausgebildet sein kann und innerhalb von zwei ringförmigen Statorelementen 42a, b angeordnet ist, die koaxial an dem zweiten Lenkwellenteil 11 angebracht sind. Die Statorelemente 42a, b weisen Anschlussabschnitte 43a, b auf, die kreisscheibenförmig ausgebildet sind und radial nach außen vorstehen. Dabei haben die Anschlussabschnitte 43a,b auf ihren axial gegeneinander gerichteten Innenseiten und ihren axial voneinander weg gerichteten Außenseiten quer zur Achse L stehende Axialflächen.

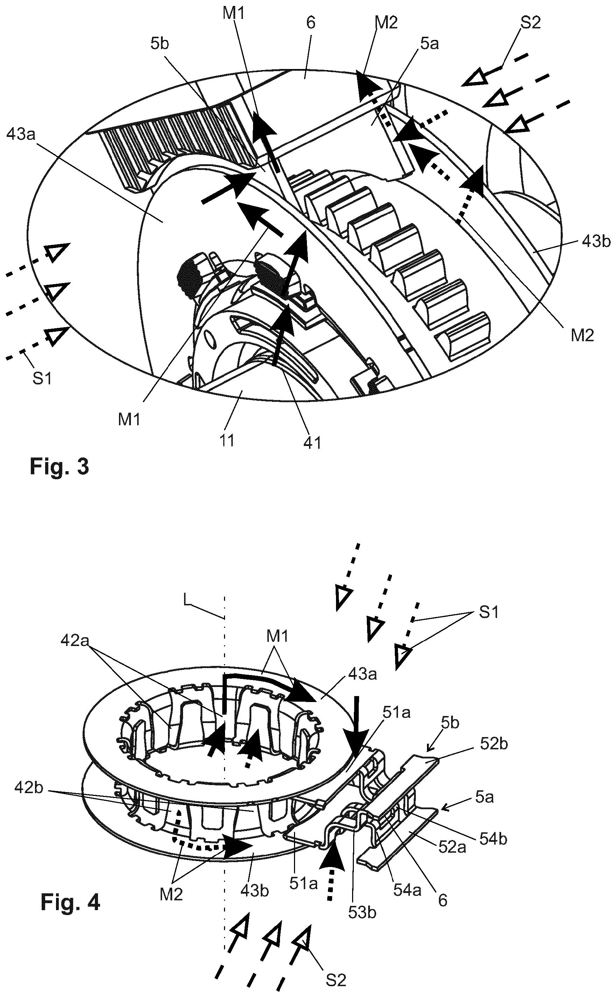

Die beiden Statorelemente 42a,b sind magnetisch leitend an zwei Flussleiter 5a,b angekoppelt, die in den Figuren 4 bis 8 in verschiedenen Ansichten dargestellt sind.

Die Flussleiter 5a,b sind als einstückige Blechformteile ausgebildet und weisen einen Sammelabschnitt 51a,b und einen Kompensatorabschnitt 52a,b auf, die über einen stegförmigen Verbindungsabschnitt 53a,b miteinander verbunden sind. Die Sammelabschnitte 51a,b und die Kompensatorabschnitte 52a,b erstrecken sich parallel zu einer senkrecht zur Achse stehenden Axialfläche, wobei Sammelabschnitte 51a,b sich jeweils über eine Sammelfläche erstrecken, und die Kompensatorabschnitte 52a,b jeweils entsprechend über eine Kompensatorfläche.

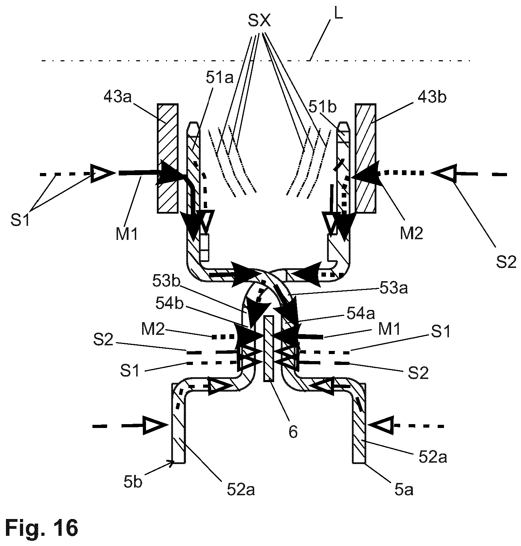

In der Figur 16 ist die Wirkung der Flussablenkung SX auf den Störfluss S1 und S2 an den Sammelabschnitten 51a und 51b veranschaulicht. Die Ansammlung von ferromagnetischen Bauteilen, wie die Verdrehsicherungen 1001, 1101 und eventuell zusätzlich von einem Zahnrad 9, insbesondere wie im Beispiel gezeigt ein Schneckenzahnrad mit Metallkern, verändern die Verhältnisse des magnetischen Flusses derart, dass die Größen der Flächen der Sammelabschnitte 51a und 51b im Verhältnis zu den Flächen der Kompensatorabschnitten 52a und 52b entsprechend angepasst werden muss.

Erfindungsgemäß ist die Sammelfläche jeweils größer als die Kompensatorfläche, in einem der oben angegebenen erfindungsgemäßen Flächenverhältnisse.

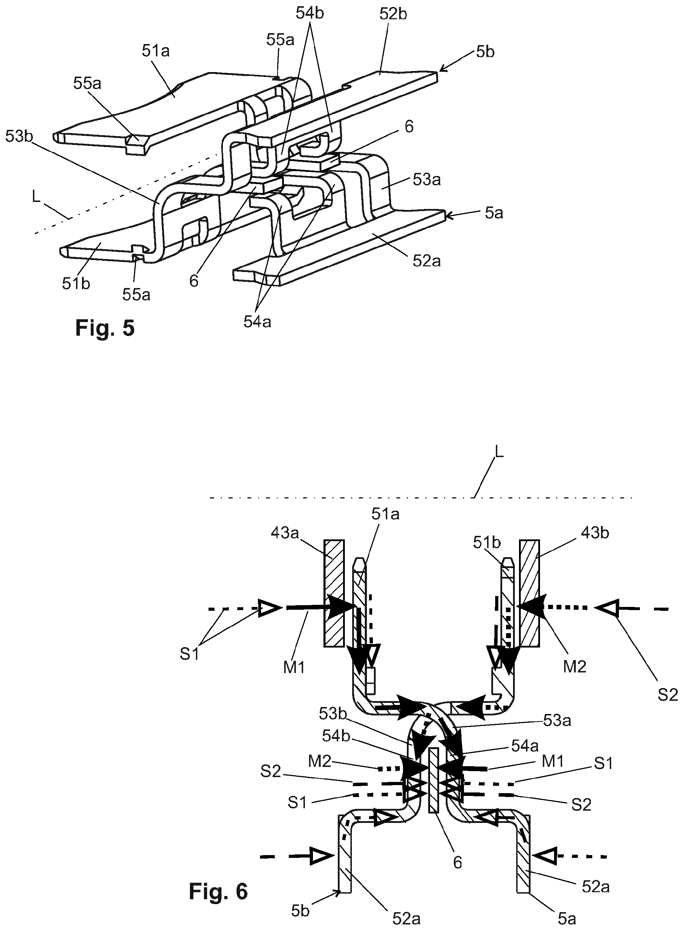

An den Kompensatorabschnitten 52a,b sind Flussfinger 54a,b angebracht, die axial in den Zwischenraum zwischen den Anschlussabschnitten 43a,b vorstehen und als Koppelelemente dienen. In dem axialen Luftspalt zwischen den Flussfingern 54a,b sind Sensorelemente 6 zur magnetischen Flussmessung angeordnet, beispielsweise Hall- oder GMR-Sensoren. Wie in Figur 5 erkennbar, können beispielsweise zwei Sensorelemente 6 vorgesehen sein, die in beabstandet zwischen Koppelabschnitten in den Endbereichen der voneinander beabstandeten Flussfinger 54a,b in Umfangsrichtung angeordnet sind.

Wie in Figuren 3, 4, 6 und 8 erkennbar ist, sind die Sammelabschnitte 51a,b an den Innenseiten der Anschlussabschnitte 43a,b angebracht.

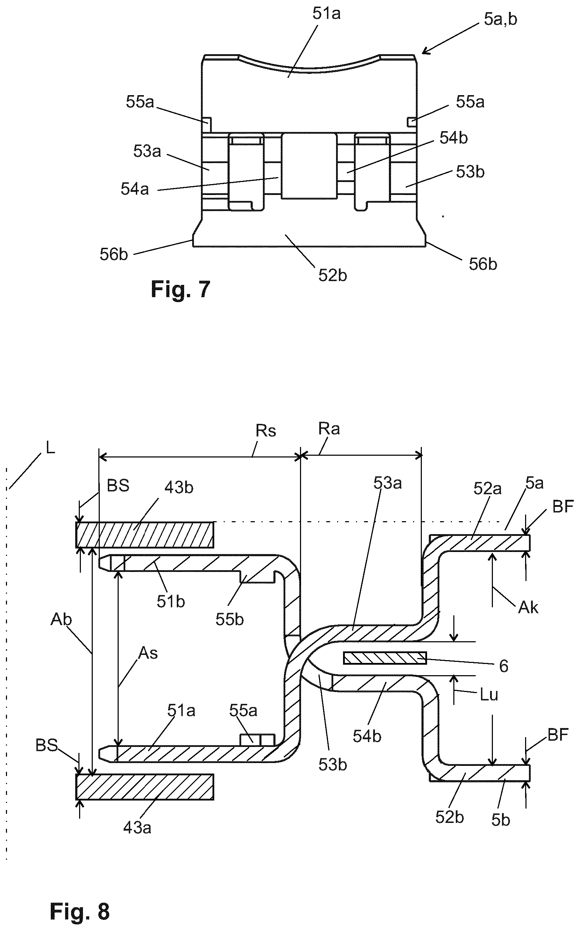

Die die Flussleiter 5a,b sind zwischen den Kompensatorabschnitten 52a,b und den Sammelabschnitten 51a,b im Bereich der Verbindungsabschnitte 53a,b überkreuzt, so dass sie sich axial entgegengesetzt gegenüberliegen. Dabei sind die axialen Positionen vertauscht, so dass der Sammelabschnitt 51a des einen Flussleiters 5a und der Kompensatorabschnitt 52b des anderen Flussleiters 5b axial auf der Seite liegen, wo der Anschlussabschnitt 43a des einen Staorelements 42a angeordnet ist, und der Sammelabschnitt 51b des anderen Flussleiters 5b und der Kompensatorabschnitt 52a des einen Flussleiters 5a einander axial gegenüberliegend auf der anderen Seite. Dadurch wird eine Anordnung gebildet, die bezüglich einer quer zur Achse L stehenden Spiegelebene spiegelsymmetrisch ist. In Umfangsrichtung gesehen wird durch die Verbindungslinien entlang der Verbindungsabschnitte 53a,b zwischen den Sammelabschnitten 51a und Kompensatorabschnitten 52beine X-förmige Konfiguration gebildet, wie in den Figuren 6 und 8 deutlich zu erkennen ist.

In den Figuren 3, 4, 6, 10 und 11 ist der von dem Magneten 41 in das eine Statorelement 42a eingekoppelte magnetische Fluss als Messfluss M1 bezeichnet, und der in das andere Statorelement 42b eingekoppelte magnetische Fluss als Messfluss M2. Die Messflüsse M1 und M2 mit gefüllten Pfeilen eingezeichnet.

Externe Störfelder sind in Figuren 1, 3, 4, 6, 10 und 11 als ungefüllte Pfeile eingezeichnet, diese erzeugen magnetische Störflüsse S1 und S2.

Der von dem Magnet 41 in das Statorelement 42a eingekoppelte Messfluss M1 wird über das Anschlussabschnitt 43a in den Sammelabschnitt 51a des Flussleiters 5a geleitet, und über das Verbindungselement 53a und das Kompensatorelement 51a durch den Flussfinger 54a in das Sensorelement 6 eingeleitet. Entsprechend gelangt der Messfluss M2 durch den Sammelabschnitt 51b des Flussleiters 5b, über das Verbindungselement 53b und das Kompensatorelement 51b durch den Flussfinger 54b zur axial gegenüberliegenden Seite des Sensorelement 6. Dies ist in Figuren 3 und 4 dargestellt.

Die externen magnetischen Störfelder werden als Störflüsse S1 und S2 zumindest teilweise in die Statorelemente 42a,b, die Anschlussabschnitte 43a,b, und die Sammelabschnitte 51 eingekoppelt, und in die Kompensatorabschnitte 52a,b. Wie in der Schnittansicht von Figur 6 schematisch eingezeichnet, ist in dem Koppelabschnitt des Flussfingers 54a, der an das Sensorelement 6 axial angekoppelt ist, der Messfluss M1 überlagert von den Störflüssen S1 und S2. Analog ist in dem Koppelabschnitt des anderen Flussfingers 54b der andere Messfluss M2 ebenfalls überlagert von den Störflüssen S1 und S2.

Über die Flussfinger 54a, b werden die von den Sammelabschnitten 51a,b und von den Kompensatorabschnitten 52a,b kommenden Störflüsse S1 und S2 mit entgegengesetzten Vorzeichen in das Sensorelement 6 eingekoppelt. Dadurch werden sie kompensiert und löschen sie sich im Idealfall gegenseitig aus, so dass nur die Messflüsse M1 und M2 von dem Sensorelement 6 gemessen werden.

Die Sammelabschnitte 51a,b können vorspringende Anschlagabschnitte 55a,b aufweisen, die im Beispiel axial nach innen wie in Figuren 5 und 8 gezeigt vorstehen können, und zusätzlich oder alternativ nach außen, und/oder in Umfangsrichtung. Diese können einstückig umgeformt sein, beispielsweise durch Umbiegen des Blechs.

Die Kompensatorabschnitte 52a,b können seitlich, im Beispiel in Umfangsrichtung, vorstehende Führungsabschnitte 56a,b aufweisen. Diese können als einstückig geformte Führungsnasen ausgebildet sein.

Die Sammelfläche, d.h. die Axialfläche eine Sammelabschnitts 51a,b ist erfindungsgemäß größer als die Kompensatorfläche, d.h. die Axialfläche eines Kompensatorabschnitts 52a,b. Das Flächenverhältnis kann bevorzugt gemäß den oben in der Beschreibung der Erfindung definierten Bereichen liegen.

Die Statorelemente 42a,b können einschließlich der Anschlussabschnitte 43a,b aus Blech mit einer Blechdicke BS ausgebildet sein, die beispielsweise 0,8 mm betragen kann.

Die Flussleiter 5a,b können einstückig als Blechformteile aus Blech mit einer Blechdicke BF ausgebildet sein, die beispielsweise 0,8 mm betragen kann.

Die Kompensatorabschnitte 52a,b können relativ zu den Sammelabschnitten 51a,b eine axiale Höhendifferenz haben, die in etwa der Blechdicke BF oder BS entspricht, so dass die Kompensatorabschnitte 52a,b im Wesentlichen bündig mit den Anschlussabschnitten 43a,b sind, wie in Figur 8 schematisch angedeutet ist.

Die Sammelabschnitte 51a,b können einen axialen Abstand As haben, der kleiner ist als der axiale Abstand Ak der Kompensatorabschnitte 52a,b.

Die Kompensatorabschnitte 52a,b können relativ zu den Sammelabschnitten 51a,b einen radialen Abstand Ra haben, der sich zur radialen Breite Rs der Sammelabschnitte 51a,b (in Richtung des Abstands Ra gemessen) verhält, wie dies oben in der Beschreibung der Erfindung definiert ist.

Die Flussfinger 54a,b haben im Bereich des Sensorelements 6 einen axialen Abstand Lu des Luftspalts voneinander, der zur Blechdicke BF bevorzugt in einem Verhältnis gemäß den oben in der Beschreibung der Erfindung definierten Bereichen stehen kann. Dabei ist es vorteilhaft, dass ein axialer Höhenabstand zwischen den Flussfingern 54a,b und dem Sensorelement 6 kleiner als Blechdicke BF.

Der axiale Abstand Ab der Anschlussabschnitte 43a,b kann bevorzugt etwa das 15-fache der Blechdicke BS betragen.

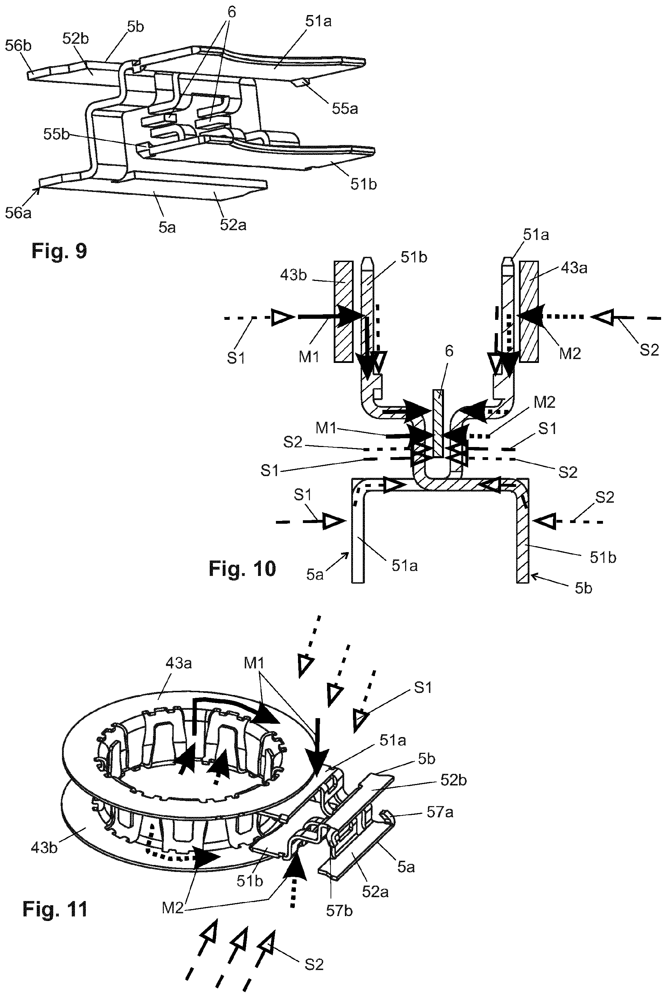

Die Figuren 9 und 10 zeigen in denselben Ansichten wie Figuren 5 und 6 eine alternative Anordnung der Flussleiter 5a,b. Dabei überkreuzen sich die Verbindungsabschnitte 53a,b näher an den Kompensatorabschnitten 52a,b, während sie sich in der vorangehend beschriebenen Ausführung näher an den Sammelabschnitten 51a,b kreuzen.

Die in den Figuren 11 bis 13 gezeigte Weiterbildung der Erfindung weist die funktionalen Elemente der vorangehend beschriebenen ersten Ausführung auf, und es werden sinngemäß dieselben Bezugszeichen verwendet.

Wie der ersten Ausführung sind zwei Sensorelemente 6 vorhanden, die auf einer Leiterplatte 61 (Platine 61) montiert und elektrisch angeschlossen sind.

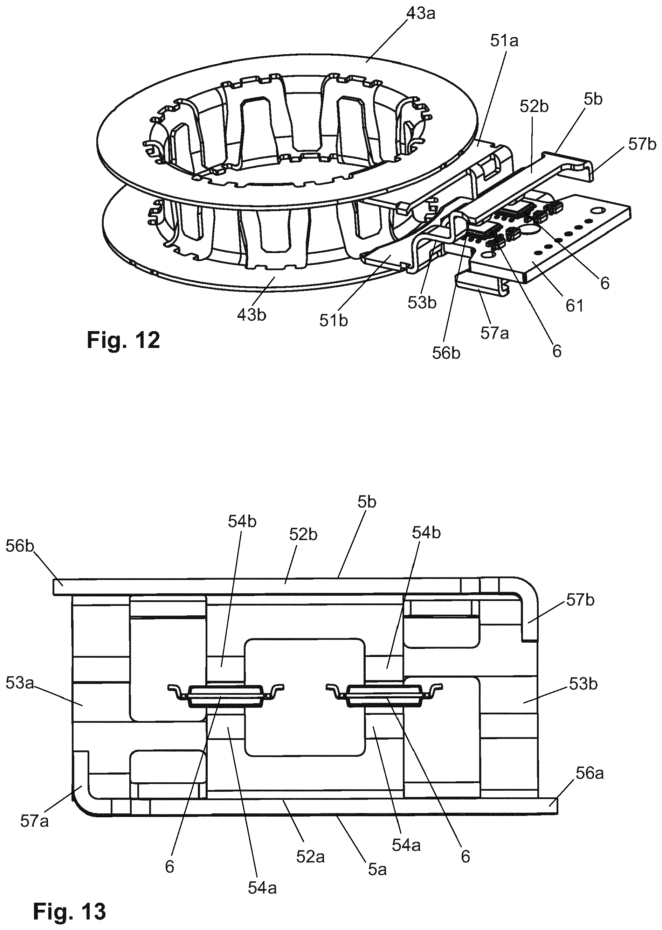

Zusätzlich zur ersten Ausführung weisen die Kompensatorabschnitte 52a,b jeweils einen abgewinkelten Flügelabschnitt 57a,b auf, auch als Winglet bezeichnet, der in axialer Richtung in den Zwischenraum zwischen den Kompensatorabschnitten 52a,b vorsteht, wie in der radialen Ansicht von Figur 13 erkennbar ist. Ein Flügelabschnitt 57a,b kann Abmessungen im Verhältnis zur Blechdicke Bf haben, wie dies oben in der Beschreibung der Erfindung definiert ist.

Die Flussleiter 5a,b sind abschnittweise in den Innenraum eines Gehäuses 8 hineingeführt. Die Sensorelemente 6 sind ebenfalls darin aufgenommen.

### Bezugszeichenliste

- 1: Lenksystem
- 10: Lenkwellenteil
- 1001: erste Verdrehsicherung
- 10011: Rücksprung
- 10012: Vorsprung, Zahn
- 1002: torsionselastischer Drehstab
- 1003: Stift
- 11: Lenkwellenteil
- 1101: zweite Verdrehsicherung
- 11011: Rücksprung
- 11012: Vorsprung, Zahn
- 12: Lenkrad
- 13: Kreuzgelenk
- 14: Ritzel
- 15: Zahnstange
- 16: Spurstange
- 17: Rad
- 2: Lenksäule
- 21: Trageinheit
- 3,31: Hilfskraftantrieb
- 4: Drehsensor
- 41: Magnet (Ringmagnet)
- 42a,b: Statorelement
- 43a,b: Anschlussabschnitt
- 5a,b: Flussleiter
- 51a,b: Sammelabschnitt
- 52a,b: Kompensatorabschnitt
- 53a,b: Verbindungsabschnitt
- 54a,b: Flussfinger
- 55a,b: Anschlagabschnitt
- 56a,b: Führungsabschnitt
- 57a,b: Flügelabschnitt (Winglet)
- 6: Sensorelement
- 61: Leiterplatte
- 8: Gehäuse
- 9: Zahnrad
- L: Achse
- M1: Messfluss
- M2: Messfluss
- S1: Störfluss
- S2: Störfluss
- SX: Flussablenkung
- BF: Blechdicke
- BS: Blechdicke
- Ab: axialer Abstand
- As: axialer Abstand
- Ak: axialer Abstand
- Ra: radialer Abstand
- Rs: radiale Breite
- Lu: axialer Abstand (Luftspalt)

## Patentansprüche

1. Lenksystem (1) für ein Kraftfahrzeug mit einer Lenkwelle (10,11), einem Drehstab (1002) und einem mindestens ein Sensorelement (6) aufweisenden Drehsensor (4), umfassend ein an der Lenkwelle (10, 11) angebrachtes, mit dieser um eine Achse (L) drehbares Magnetelement (41), und zwei Flussleiter (5a, 5b), und zwei relativ zur Lenkwelle (10, 11) feststehend koaxial angeordnete, axial zueinander beabstandete Statorelemente (42a,b), die über die zwei Flussleiter (5a,b) mit dem mindestens einen Sensorelement (6) wirkverbunden sind, wobei ein Flussleiter (5a,b) jeweils einen Sammelabschnitt (51a,b), einen Verbindungsabschnitt (53a,b) und einen Kompensatorabschnitt (52a,b) aufweist, wobei der Sammelabschnitt (51a,b) mit einem Statorelement (42a,b) verbunden ist und über einen Verbindungsabschnitt (53a,b) mit dem Kompensatorabschnitt (52a,b) verbunden ist, und wobei das Sensorelement (6) zwischen den beiden Flussleitern (5a,b) angeordnet ist, wobei die Lenkwelle eine obere Lenkwelle (10) umfasst, die über den Drehstab (1002) mit einer unteren Lenkwelle (11) verbunden ist,
**dadurch gekennzeichnet,**
**dass** eine an der oberen Lenkwelle (10) angeordnete Verdrehsicherung (1001) mit einer an der unteren Lenkwelle (1002) angeordneten Verdrehsicherung (1101) zur Begrenzung einer Verdrillung des Drehstabes (1002) in sich selbst, in Eingriff gebracht ist, wobei die Verdrehsicherung (1001, 1002) ein ferromagnetisches Material aufweist, und der Kompensatorabschnitt (52a,b) eine Kompensatorfläche aufweist, die kleiner als eine Sammelfläche des Sammelabschnitts (51a,b) ist, wobei das Flächenverhältnis von Sammelfläche und Kompensatorfläche zwischen 1,5 und 2, oder zwischen 1,5 und 1,75, oder 1,75 beträgt.

2. Lenksystem nach Anspruch 1, **dadurch gekennzeichnet, dass** die Flussleiter (5a,b) als einstückige Blechformteile ausgebildet sind.

3. Lenksystem nach einem der vorangehenden Ansprüche, **dadurch gekennzeichnet, dass** die Flussleiter (5a,b) zwischen den Kompensatorabschnitten (52a,b) und den Sammelabschnitten (51a,b) im Bereich der Verbindungsabschnitte (53a,b) überkreuzt sind, so dass sich die Kompensatorabschnitte (52a,b) und die Sammelabschnitte (51a,b) axial entgegengesetzt gegenüberliegen.

4. Lenksystem nach einem der vorangehenden Ansprüche, **dadurch gekennzeichnet, dass** die Kompensatorflächen und die Sammelflächen der Flussleiter (5a,b) überwiegend parallel zueinander und zu Anschlussabschnitten (43a,b) der Statorelemente (42a,b) sind, mit denen die Sammelabschnitte (51a,b) verbunden sind.

5. Lenksystem nach einem der vorangehenden Ansprüche, **dadurch gekennzeichnet, dass** die Sammelabschnitte (51a,b) an axial gegenüberliegenden Innenseiten der Statorelemente (42a,b) angebracht sind.

6. Lenksystem nach einem der vorangehenden Ansprüche, **dadurch gekennzeichnet, dass** der axiale Abstand (Ab) der Sammelabschnitte (51a,b) kleiner ist als der axiale Abstand (Ak) der Kompensatorabschnitte (52a,b).

7. Lenksystem nach einem der vorangehenden Ansprüche, **dadurch gekennzeichnet, dass** die Kompensatorabschnitte (52a,b) bündig mit Anschlussabschnitten (43a,b) der Statorelemente (42a,b) ausgerichtet sind.

8. Lenksystem nach einem der vorangehenden Ansprüche, **dadurch gekennzeichnet, dass** die Kompensatorabschnitte (52a,b) mit Koppelabschnitten verbunden sind, die dem Sensorelement (6) zugewandte Koppelflächen aufweisen.

9. Lenksystem nach einem der vorangehenden Ansprüche, **dadurch gekennzeichnet, dass** mindestens zwei Sensorelemente (6) mit Abstand voneinander vorgesehen sind.

10. Lenksystem nach einem der vorangehenden Ansprüche, **dadurch gekennzeichnet, dass** ein Kompensatorabschnitt (52a,b) einen abgewinkelten Flügelabschnitt (57a,b) aufweist.

11. Lenksystem nach einem der vorangehenden Ansprüche, **dadurch gekennzeichnet, dass** die Flussleiter (5a,b) und das Sensorelement (6) in einem Gehäuse (8) angeordnet sind.

12. Lenksystem nach einem der vorangehenden Ansprüche, **dadurch gekennzeichnet, dass** ein Kompensatorabschnitt (52a,b) und/oder ein Sammelabschnitt (51a,b) einen Führungsabschnitt (56a,b) aufweist.

13. Lenksystem nach einem der vorangehenden Ansprüche, **dadurch gekennzeichnet, dass** ein Sammelabschnitt (51a) des einen Flussleiters (5a) und ein Kompensatorabschnitt (52b) des anderen Flussleiters (5b) einen radialen Abstand (Ra) voneinander haben, der zu einer radialen Breite (Rs) des Sammelabschnitts (51b) des anderen Flussleiters (5b) ein Verhältnis zwischen 0,5 und 2, oder zwischen 0,75 und 1,5, oder zwischen 0,75 und 1,25, oder zwischen 0,8 und 1,2, oder von 1 aufweist.

14. Lenksystem nach einem der vorangehenden Ansprüche, **dadurch gekennzeichnet, dass** der Sammelabschnitt (51a) des einen Flussleiters (5a) zum Kompensatorabschnitt (52b) des anderen Flussleiters (5b) eine axiale Höhendifferenz hat, welche zu einer axialen Dicke (BF) eines Sammelabschnitts (51a) ein Verhältnis zwischen 0,5 bis 2, oder zwischen 0,75 bis 1,5, oder zwischen 0,75 bis 1,25, oder zwischen 0,8 bis 1,2, oder von 1 aufweist.

15. Lenksystem nach einem der vorangehenden Ansprüche, **dadurch gekennzeichnet, dass** der Sammelabschnitt (51a) des einen Flussleiters (5a) zum Kompensatorabschnitt (52b) desselben Flussleiters (5a) eine axiale Höhendifferenz hat, welche zu einer axialen Höhendifferenz zwischen den Kompensatorabschnitten (52a,b) der beiden Flussleiter (5a,b) ein Verhältnis zwischen 0,75 und 2,2, oder zwischen 0,85 und 1,2, oder zwischen 0,9 und 1,15, oder von 1,125 aufweist.

16. Lenksystem nach einem der vorangehenden Ansprüche, **dadurch gekennzeichnet, dass** die beiden Flussleiter (5a,b) in dem Bereich, in dem das Sensorelement (6) angeordnet ist, einen axiale Höhenabstand (Lu) im Bereich von 1,8 bis 2,2 einer axialen Dicke (BF) der Flussleiter (5a,b) aufweisen.

17. Lenksystem nach einem der vorangehenden Ansprüche, **dadurch gekennzeichnet, dass** ein axialer Höhenabstand zwischen den Flussleitern (5a,b) und dem Sensorelement (b) kleiner als die axiale Dicke (BF) der Flussleiter (5a,b) ist.

## Claims

1. Steering system (1) for a motor vehicle having a steering shaft (10, 11), a torsion bar (1002) and a rotary sensor (4) having at least one sensor element (6), comprising a magnet element (41) which is attached to the steering shaft (10, 11) and can rotate with the latter about an axis (L), and two flux conductors (5a, 5b), and two stator elements (42a, b) which are fixedly arranged coaxially relative to the steering shaft (10, 11) and axially spaced apart from one another and which are operatively connected to the at least one sensor element (6) via the two flux conductors (5a, b), wherein one flux conductor (5a,b) has a collecting section (51a,b), a connecting section (53a,b) and a compensator section (52a,b), wherein the collecting section (51a,b) is connected to a stator element (42a,b) and is connected to the compensator section via a connecting section (53a,b) to the compensator section (52a,b), and wherein the sensor element (6) is arranged between the two flux conductors (5a,b), wherein the steering shaft comprises an upper steering shaft (10) which is connected to a lower steering shaft (11) via the torsion bar (1002),
**characterized in**
**in that** an anti-rotation lock (1001) arranged on the upper steering shaft (10) is brought into engagement with an anti-rotation lock (1101) arranged on the lower steering shaft (1002) for limiting a twisting of the torsion bar (1002) in itself, the anti-rotation lock (1001, 1002) has a ferromagnetic material, and the compensator portion (52a,b) has a compensator area which is smaller than a collecting area of the collecting portion (51a,b), wherein the area ratio of the collecting area and the compensator area is between 1.5 and 2, or between 1.5 and 1.75, or 1.75.

2. Steering system according to claim 1, **characterized in that** the flux conductors (5a, b) are designed as one-piece sheet-metal parts.

3. Steering system according to one of the preceding claims, **characterized in that** the flux conductors (5a, b) between the compensator sections (52a, b) and the collector sections (51a, b) are crossed in the region of the connecting sections (53a, b), so that the compensator sections (52a, b) and the collector sections (51a, b) are located axially opposite one another.

4. Steering system according to one of the preceding claims, **characterized in that** the compensator surfaces and the collecting surfaces of the flux conductors (5a, b) are predominantly parallel to one another and to connection sections (43a, b) of the stator elements (42a, b) to which the collecting sections (51a, b) are connected.

5. Steering system according to one of the preceding claims, **characterized in that** the collecting sections (51a, b) are attached to axially opposite inner sides of the stator elements (42a, b).

6. Steering system according to one of the preceding claims, **characterized in that** the axial spacing (Ab) of the collector sections (51a, b) is smaller than the axial spacing (Ak) of the compensator sections (52a, b).

7. Steering system according to one of the preceding claims, **characterized in that** the compensator sections (52a, b) are aligned flush with connection sections (43a, b) of the stator elements (42a, b).

8. Steering system according to one of the preceding claims, **characterized in that** the compensator sections (52a, b) are connected to coupling sections which have coupling surfaces facing the sensor element (6).

9. Steering system according to one of the preceding claims, **characterized in that** at least two sensor elements (6) are provided at a distance from one another.

10. Steering system according to one of the preceding claims, **characterized in that** a compensator section (52a, b) has an angled wing section (57a, b).

11. Steering system according to one of the preceding claims, **characterized in that** the flux conductors (5a, b) and the sensor element (6) are arranged in a housing (8).

12. Steering system according to one of the preceding claims, **characterized in that** a compensator section (52a,b) and/or a collector section (51a,b) has a guide section (56a,b).

13. Steering system according to one of the preceding claims, **characterized in that** a collecting section (51a) of one flux conductor (5a) and a compensator section (52b) of the other flux conductor (5b) have a radial distance (Ra) from one another, which has a ratio of between 0.5 and 2, or between 0.75 and 1.5, or between 0.75 and 1.25, or between 0.8 and 1.2, or of 1 to a radial width (Rs) of the collecting section (51b) of the other flux conductor (5b).

14. Steering system according to one of the preceding claims, **characterized in that** the collecting section (51a) of one flux conductor (5a) has an axial height difference to the compensator section (52b) of the other flux conductor (5b), which has a ratio of between 0.5 to 2, or between 0.75 to 1.5, or between 0.75 to 1.25, or between 0.8 to 1.2, or of 1 to an axial thickness (BF) of a collecting section (51a).

15. Steering system according to one of the preceding claims, **characterized in that** the collecting section (51a) of one flux conductor (5a) has an axial height difference to the compensator section (52b) of the same flux conductor (5a) which has a ratio of between 0.75 and 2.2, or between 0.85 and 1.2, or between 0.9 and 1.15, or of 1.125 to an axial height difference between the compensator sections (52a, b) of the two flow guides (5a, b).

16. Steering system according to one of the preceding claims, **characterized in that** the two flux conductors (5a, b) in the region in which the sensor element (6) is arranged have an axial height spacing (Lu) in the range from 1.8 to 2.2 of an axial thickness (BF) of the flux conductors (5a, b).

17. Steering system according to one of the preceding claims, **characterized in that** an axial height distance between the flux conductors (5a, b) and the sensor element (b) is smaller than the axial thickness (BF) of the flux conductors (5a, b).

## Revendications

1. Système de direction (1) pour un véhicule automobile avec un arbre de direction (10, 11), une barre de torsion (1002) et un capteur de rotation (4) présentant au moins un élément de détection (6), comprenant un élément magnétique (41) monté sur l'arbre de direction (10, 11) et pouvant tourner avec celui-ci autour d'un axe (L), et deux conducteurs de flux (5a, 5b), et deux éléments de stator (42a, b) disposés coaxiale-ment de manière fixe par rapport à l'arbre de direction (10, 11) et espacés axialement l'un de l'autre, qui sont en liaison active avec l'au moins un élément de capteur (6) par l'intermédiaire des deux conducteurs de flux (5a, b), un conducteur de flux (5a, b) présentant respectivement une section de collecte (51a, b), une section de liaison (53a, b) et une section de compensation (52a, b), la section de collecte (51a, b) étant reliée à un élément de stator (42a, b) et étant reliée par une section de liaison (53a,b) à la section de compensation (52a,b), et dans lequel l'élément de détection (6) est disposé entre les deux conducteurs de flux (5a,b)l'arbre de direction comprenant un arbre de direction supérieur (10) qui est relié à un arbre de direction inférieur (11) via la barre de torsion (1002),
**caractérisé en ce que**
**en ce qu'**une sécurité anti-torsion (1001) disposée sur l'arbre de direction supérieur (10) est mise en prise avec une sécurité anti-torsion (1101) disposée sur l'arbre de direction inférieur (1002) pour limiter une torsion de la barre de torsion (1002) sur elle-même, la sécurité anti-torsion (1001, 1002) comprend un matériau ferromagnétique, et la section de compensateur (52a, b) comprend une surface de compensateur qui est plus petite qu'une surface collectrice de la section collectrice (51a, b), le rapport de surface entre la surface collectrice et la surface de compensateur étant compris entre 1,5 et 2, ou entre 1,5 et 1,75, ou 1,75.

2. Système de direction selon la revendication 1, **caractérisé en ce que** les guides de flux (5a, b) sont réalisés sous forme de pièces moulées en tôle d'une seule pièce.

3. Système de direction selon l'une quelconque des revendications précédentes, **caractérisé en ce que** les conducteurs de flux (5a, b) entre les sections de compensateur (52a, b) et les sections de collecteur (51a, b) sont croisés au niveau des sections de liaison (53a, b), de sorte que les sections de compensateur (52a, b) et les sections de collecteur (51a, b) sont axialement opposées.

4. Système de direction selon l'une des revendications précédentes, **caractérisé en ce que** les surfaces de compensation et les surfaces collectrices des guides de flux (5a, b) sont principalement parallèles les unes aux autres et aux sections de connexion (43a, b) des éléments de stator (42a, b) auxquels les sections collectrices (51a, b) sont connectées.

5. Système de direction selon l'une quelconque des revendications précédentes, **caractérisé en ce que** les parties collectrices (51a, b) sont montées sur des faces internes axialement opposées des éléments de stator (42a, b).

6. Système de direction selon l'une des revendications précédentes, **caractérisé en ce que** l'écartement axial (Ab) des portions collectrices (51a, b) est inférieur à l'écartement axial (Ak) des portions compensatrices (52a, b).

7. Système de direction selon l'une des revendications précédentes, **caractérisé en ce que** les portions de compensateur (52a, b) sont alignées avec des portions de connexion (43a, b) des éléments de stator (42a, b).

8. Système de direction selon l'une des revendications précédentes, **caractérisé en ce que** les sections de compensateur (52a, b) sont reliées à des sections de couplage qui présentent des surfaces de couplage tournées vers l'élément de capteur (6).

9. Système de direction selon l'une des revendications précédentes, **caractérisé en ce qu'**au moins deux éléments de détection (6) sont prévus à distance l'un de l'autre.

10. Système de direction selon l'une quelconque des revendications précédentes, **caractérisé en ce qu'**une section de compensateur (52a, b) comprend une section d'aile coudée (57a, b).

11. Système de direction selon l'une des revendications précédentes, **caractérisé en ce que** les conducteurs de flux (5a, b) et l'élément de détection (6) sont disposés dans un boîtier (8).

12. Système de direction selon l'une quelconque des revendications précédentes, **caractérisé en ce qu'**une section de compensateur (52a, b) et/ou une section de collecteur (51a, b) comporte une section de guidage (56a, b).

13. Système de direction selon l'une quelconque des revendications précédentes, **caractérisé en ce qu'**une section de collecte (51a) de l'un des conducteurs de flux (5a) et une section de compensation (52b) de l'autre conducteur de flux (5b) ont une distance radiale (Ra) l'une de l'autre, qui présente, par rapport à une largeur radiale (Rs) de la section de collecte (51b) de l'autre conducteur de flux (5b), un rapport compris entre 0,5 et 2, ou entre 0,75 et 1,5, ou entre 0,75 et 1,25, ou entre 0,8 et 1,2, ou égal à 1.

14. Système de direction selon l'une quelconque des revendications précédentes, **caractérisé en ce que** la partie collectrice (51a) de l'un des conducteurs de flux (5a) présente, par rapport à la partie compensatrice (52b) de l'autre conducteur de flux (5b), une différence de hauteur axiale qui présente, par rapport à une épaisseur axiale (BF) d'une partie collectrice (51a), un rapport compris entre 0,5 et 2, ou entre 0,75 et 1,5, ou entre 0,75 et 1,25, ou entre 0,8 et 1,2, ou égal à 1.

15. Système de direction selon l'une quelconque des revendications précédentes, **caractérisé en ce que** la section de collecte (51a) de l'un des conducteurs de flux (5a) a, par rapport à la section de compensation (52b) du même conducteur de flux (5a), une différence de hauteur axiale qui présente, par rapport à une différence de hauteur axiale entre les sections de compensation (52a, b) des deux conducteurs de flux (5a, b), un rapport compris entre 0,75 et 2,2, ou entre 0,85 et 1,2, ou entre 0,9 et 1,15, ou de 1,125.

16. Système de direction selon l'une quelconque des revendications précédentes, **caractérisé en ce que** les deux conducteurs de flux (5a, b) présentent, dans la zone dans laquelle l'élément de détection (6) est disposé, une distance en hauteur axiale (Lu) comprise entre 1,8 et 2,2 d'une épaisseur axiale (BF) des conducteurs de flux (5a, b).

17. Système de direction selon l'une des revendications précédentes, **caractérisé en ce qu'**une distance axiale en hauteur entre les conducteurs de flux (5a, b) et l'élément de détection (b) est inférieure à l'épaisseur axiale (BF) des conducteurs de flux (5a, b).
